**Europäisches Patentamt**

**European Patent Office**

**Office européen des brevets**

(11) Veröffentlichungsnummer: **0 462 408 A2**

# EUROPÄISCHE PATENTANMELDUNG

(21) Anmeldenummer: **91108232.9**

(22) Anmeldetag: **22.05.91**

(51) Int. Cl.5: **C08J 3/03, C08G 65/26, //C08L71:02**

(30) Priorität: **01.06.90 DE 4017688**

(43) Veröffentlichungstag der Anmeldung:
**27.12.91 Patentblatt 91/52**

(84) Benannte Vertragsstaaten:
**DE FR GB IT**

(71) Anmelder: **BAYER AG**

**W-5090 Leverkusen 1 Bayerwerk(DE)**

(72) Erfinder: **Rasp, Christian, Dr.**
**Klutstein 13**
**W-5060 Bergisch Gladbach 2(DE)**
Erfinder: **Timmermann, Ralf, Dr.**
**Weggenhofstrasse 6**
**W-4150 Krefeld(DE)**
Erfinder: **Perrey, Hermann, Dr.**
**Auf der Rheinaue 8**
**W-4150 Krefeld 11(DE)**

(54) **Auf neuen Polyoxyalkylenpolymeren basierende funktionelle wässrige Flüssigkeiten.**

(57) Funktionelle Flüssigkeiten enthalten Wasser, Polyoxyalkylenpolymere, gegebenenfalls Alkohole und gegebenenfalls übliche Zusatzstoffe und sind gekennzeichnet dadurch, daß sie als Verdicker Polyoxyalkylen-Blockpolymere enthalten, die aus einem an einem Startermolekül (S) gebundenen hydrophoben Polyoxyalkylen-Block (P) und daran anschließend einem hydrophilen Polyoxyalkylen-Block (E) bestehen, wobei (S + P) das Umsetzungsprodukt von (S) mit 20 bis 45 Mol (je Äquivalent Aktivwasserstoff in S) Propylenoxid oder einem überwiegend Propylenoxid enthaltenden Ethylenoxid/ Propylenoxid-Gemisch darstellt und auf dieses, gegebenenfalls nach einer teilweisen oder vollständigen Aminierung der an (S + P) vorhandenen OH-Gruppen, 5 bis 30 Mol (je Alkylenoxid-Einheit in P) Ethylenoxid oder ein überwiegend Ethylenoxid enthaltendes Ethylenoxid/ Propylenoxid-Gemisch aufpolymerisiert worden sind und anschließend an den hydrophilen Polyalkylenoxid-Block (E) noch einen weiteren hydrophoben Molekülteil (H) enthalten. Derartige Polyoxyalkylen-Blockpolymere sind neu.

EP 0 462 408 A2

Die vorliegende Erfindung betrifft funktionelle Flüssigkeiten auf der Basis von Wasser, die als Verdik-kungsmittel neue Polyoxyalkylenpolymere enthalten, sowie neue Polyoxyalkylenpolymere.

Es ist bekannt, daß man bestimmte Polyoxyalkylenpolymere als Verdickungsmittel für wäßrige Systeme verwenden kann (siehe z.B. DE-PS 2 220 338, DE-OS 38 36 902, EP-OS 54 953, EP-OS 109 515, US-PS 4 452 712, US-PS 4 481 367, CA-PS 862 804, WO-OS 84/361, Macromolecules 1987 (20), S. 3089 bis 3091 und Technical Data an Pluronic® Polyols - Kundenzirkular der Fa. BASF-Wyandotte Corp.). Insbesondere mit den in der DE-OS 38 36 902 beschriebenen Polyoxyalkylen-Blockcopolymeren erfolgt eine sehr gute Verdickungswirkung. Es wurde jetzt festgestellt, daß derartige Systeme zur Schaumbildung neigen und bei ihnen das Luftabscheidevermögen häufig zu gering ist.

Es ist weiterhin bekannt, daß man Silikone als Entschäumungsmittel verwenden kann, wobei die Silikone in der schäumenden Flüssigkeit nicht löslich sein sollen (siehe Römpps Chemielexikon, 8. Auflage, Band 5, S. 3705 (1987).

Es wurden nun funktionelle Flüssigkeiten gefunden, die Wasser und Polyoxyalkylenpolymere, sowie gegebenenfalls Alkohole und gegebenenfalls übliche Zusatzstoffe enthalten, die dadurch gekennzeichnet sind, daß sie als Verdicker Polyoxyalkylen-Blockpolymere enthalten, die aus einem an einem Startermolekül (S) gebundenen hydrophoben Polyoxyalkylen-Block (P) und daran anschließend einem hydrophilen Polyoxyalkylen-Block (E) bestehen, wobei (S + P) das Umsetzungsprodukt von (S) mit 20 bis 45 Mol (je Äquivalent Aktivwasserstoff in S) Propylenoxid oder einem überwiegend Propylenoxid enthaltenden Ethylenoxid/Propylenoxid-Gemisch darstellt und auf dieses, gegebenenfalls nach einer teilweisen oder vollständigen Aminierung der an (S + P) vorhandenen OH-Gruppen, 5 bis 30 Mol (je Alkylenoxid-Einheit in P) Ethylenoxid oder ein überwiegend Ethylenoxid enthaltendes Ethylenoxid/Propylenoxid-Gemisch aufpolymerisiert worden sind und anschließend an den hydrophilen Polyalkylenoxid-Block (E) noch einen weiteren hydrophoben Molekülteil (H) enthalten.

Bei den erfindungsgemäßen, auf Wasser basierenden funktionellen Flüssigkeiten kann es sich z.B. um Schmiermittel, Hilfsmittel für die Metallbearbeitung oder Hydraulik- oder Wärmeübertragungsmittel handeln, Erfindungsgemäße funktionelle Flüssigkeiten können z.B. 30 bis 85 Gew.-% Wasser und 0,5 bis 20 Gew.-% des Polyoxyalkylenpolymer-Verdickers enthalten. Bevorzugt sind Gehalte von 35 bis 50 Gew.-% Wasser und 6 bis 10 Gew.-% des Verdickers.

Alkohole, z.B. Monoethylenglykol, Diethylenglykol, Butoxy-ethoxy-ethanol, Monopropylenglykol und/oder Dipropylenglykol, bevorzugt Diethylenglykol, können in den erfindungsgemäßen funktionellen Flüssigkeiten z.B. in einer Menge von 0 bis 40 Gew.-% enthalten sein. Vorzugsweise beträgt diese Menge 20 bis 40 Gew.-%.

Als übliche Zusatzstoffe kommen z.B. Korrosionsinhibitoren, wie Tolutriazol, Di- und/oder Triethanolamin und Borsäureaminester (z.B. Rewocoros® RA-BE), Verschleißschutzmittel, wie Polyoxyethylen-octadecylenetherphosphat (z.B. Gafen® LB 400), Fettamine bzw. ethoxylierte Fettamine (z.B. Noramox® 011) oder ethoxylierte Fettsäureamide (z.B. Dionil® W100) und/oder Antioxidantien, wie Glykole, in Frage. Übliche Zusatzstoffe (ohne Glykole) können z.B. in einer Menge von 0 bis 20 Gew.-%, vorzugsweise in einer Menge von 4 bis 10 Gew.-%, vorhanden sein.

Es ist ein wesentliches Merkmal, daß die erfindungsgemäßen funktionellen Flüssigkeiten als Verdicker ein Polyoxyalkylenpolymeres enthalten, das neben den bekannten Molekülteilen S, P und E anschließend an den Molekülteil E noch einen weiteren hydrophoben Molekülteil (H) enthalten. Polyoxyalkylenpolymere, welche die Molekülteile S, P und E enthalten, und deren Herstellung sind bekannt (siehe z.B. DE-A 38 36 902). In solche Polyoxyalkylenpolymere können weitere hydrophobe Molekülteile H eingeführt werden, indem man ein Polyoxyalkylenpolymeres der vorbeschriebenen Art, das aus den Molekülteilen S, P und E besteht und im Teil E endständige OH-Gruppen enthält, beispielsweise mit 4 bis 30 Mol Propylenoxid (pro Äquivalent OH-Gruppen) und in Gegenwart eines Katalysators, mit Glycidylethern mit 4 bis 30 C-Atomen, mit α-Olefinoxiden mit 4 bis 30 C-Atomen oder mit Monoisocyanaten mit 9 bis 22 C-Atomen umsetzt. Diese Umsetzungen können nach an sich bekannten Methoden erfolgen (siehe z.B. Organikum, 16. Auflage, S. 407 und Houben-Weyl, Band 14/2, S. 425 ff. und Band E4, S. 142 ff).

Bevorzugt sind dabei Umsetzungen mit α-Olefinoxiden mit 4 bis 18 C-Atomen, (teil-)aromatischen Glycidylethern mit 6 bis 25 C-Atomen und Monoisocyanaten mit 9 bis 22 C-Atomen.

Besonders bevorzugt sind dabei Umsetzungen mit n-Alkylphenyl-glycidylethern und mit aliphatischen, aromatischen oder araliphatischen Monoisocyanaten, jeweils mit 9 bis 22 C-Atomen.

Weiterhin ist es bevorzugt, die Umsetzung von am Molekülteil E endständig befindlichen OH-Gruppen mit Propylenoxid, Glycidylethern, α-Olefinoxiden oder Monoisocyanaten so durchzuführen, daß mehr als 50 % dieser OH-Endgruppen reagieren.

Die aus den Molekülteilen S, P, E und H aufgebauten Polyoxyalkylenpolymere sind neue Verbindungen. Die vorliegende Erfindung betrifft auch solche neuen Verbindungen. Bei diesen handelt es sich um Polyoxyalkylen-Blockcopolymere, die aus einem an einem Startermolekül (S) gebundenen hydrophoben Polyoxyalkylen-Block (P) und daran anschließend einem hydrophilen Polyalkylenoxid-Block (E) bestehen, wobei (S + P) das Umsetzungsprodukt von (S) mit 20 bis 45 Mol (je Äquivalent aktiven Wasserstoffs in (S)) Propylenoxid oder einem überwiegend Propylenoxid enthaltenden Ethylenoxid/Propylenoxid-Gemisch darstellt, und auf dieses, gegebenenfalls nach einer teilweisen oder vollständigen Aminierung der an S + P vorhandenen OH-Gruppen, 5 bis 30 Mol (je Alkylenoxid-Einheit in P) Ethylenoxid oder ein überwiegend Ethylenoxid enthaltendes Ethylenoxid/Propylenoxid-Gemisch aufpolymerisiert worden sind, die dadurch gekennzeichnet sind, daß sie anschließend an den Polyalkylenoxid-Block E noch einen weiteren hydrophoben Molekülteil H enthalten. Wie solche weiteren hydrophoben Molekülteile H enthaltenden Polyoxyalkylenpolymere hergestellt werden können und damit auch die Art dieser weiteren Molekülteile H ist weiter oben beschrieben.

Die aus den Molekülteilen S, P, E und H aufgebauten Polyoxyalkylenpolymere können in den erfindungsgemäßen funktionellen Flüssigkeiten als einzige Polyoxyalkylenpolymere enthalten sein. Es können auch bereits bekannte Polyoxyalkylenpolymere im Gemisch mit den neuen Polyoxyalkylenpolymeren vorliegen, wobei der Anteil der neuen Polyoxyalkylenpolymere, bezogen auf die insgesamt vorliegenden Polyoxyalkylenpolymere, z.B. 5 bis 95 Gew.-% betragen kann. Man kann auch bei bekannten, aus den Molekülteilen S, P und E aufgebauten Polyoxyalkylenpolymeren (siehe z.B. DE-OS 38 36 902), die OH-Endgruppen im Molekülteil E nur teilweise auf eine der oben beschriebenen Verfahrensweisen umsetzen und so weitere hydrophobe Molekülteile H nur an einzelnen, nicht aber an allen vom Molekülteil S ausgehenden Strängen anfügen.

Bei der Herstellung der erfindungsgemäßen funktionellen Flüssigkeiten mit den neuen, aus den Molekülteilen S, P, E und H aufgebauten Polyoxyalkylenpolymeren, sind keine Einschränkungen zu beachten.

## Beispiele

In den Beispielen wurden folgende Materialien verwendet:

3

## A. Gemische aus Wasser, Alkoholen und für funktionelle Flüssigkeiten üblichen Zusatzstoffen

A1    45    Gew.-Teile Wasser,

       15      "        Monoethylenglykol,

       15      "        Diethylenglykol,

       4      "        Dipropylenglykol,

       1      "        Gafen® LB400

                                (Polyoxyethylen-octadecylen-etherphosphat)

       0,1      "        Tolutriazol

       0,4      "        Diethanolamin

       0,5      "        Rewocoros® RA-BE

                                 (Borsäureaminester)

Triethanolaminzusatz bis der pH-Wert 9 beträgt.

A2    85    Gew.-Teile Wasser

       1      "        Gafen® LB 400

                                 (Polyoxyethylen-octadecylen-etherphosphat)

       1      "        Licotect® VK 175

                                 (Korrosionsschutzmittel)

       0,1      "        Tolutriazol

       0,2      "        Rewopol® CHT 12

                                 (Tensid)

       0,2      "        Phosphorsäure

       0,4      "        Diethanolamin

Triethanolaminzusatz bis der pH-Wert 8 beträgt.

### B. Polyoxyalkylenpolymere

Allgemeines Herstellungsverfahren für Polyoxyalkylenpolymere mit den Molekülteilen S, P und E:

1. Stufe: Der Starter wurde in einem Reaktor vorgelegt und mit wäßriger Kalilauge vermischt. Dann wurde unter vermindertem Druck auf 120°C erwärmt und dabei Wasser abdestilliert.

2. Stufe: Anschließend wurde bei 105 bis 120°C Propylenoxid, gegebenenfalls zusammen mit Ethylenoxid unter Rühren mit einer solchen Geschwindigkeit in den Reaktor eingeleitet, daß ein Druck von 4 bar nicht überschritten wurde. Nach Beendung der Alkylenoxid-Zugabe wurde noch 4 Stunden nachreagieren gelassen.

3. Stufe: Dem Reaktionsgemisch wurde erneut wäßrige Kalilauge zugefügt und bei vermindertem Druck bei 115°C Wasser abdestilliert.

4. Stufe: Anschließend wurde bei 105 bis 120°C Ethylenoxid, gegebenenfalls zusammen mit Propylenoxid unter Rühren mit einer solchen Geschwindigkeit in den Reaktor eingeleitet, daß ein Druck von 4 bar nicht überschritten wurde. Nach Beendung der Alkylenoxid-Zugabe wurde noch 4 Stunden nachreagieren gelassen. Dann wurde der gebildete Polyether mit Essigsäure neutralisiert.

Im einzelnen wurden die Polyalkylenpolymere B1 bis B10, enthaltend die Molekülteile S, P und E, hergestellt wie aus Tabelle 1 ersichtlich.

Tabelle 1

| | B1 | B2 | B3 | B4 | B5 | B6 | B7** | B8 | B9 | B10** |
|---|---|---|---|---|---|---|---|---|---|---|
| 1. Stufe Starter*) | 1 | 1 | 1 | 2 | 2 | 3 | 3 | 3 | 4 | 5 |
| Menge Starter (mol) | 0,20 | 0,81 | 0,17 | 0,03 | 0,15 | 0,27 | 0,03 | 0,05 | 0,05 | 1,0 |
| 45 gew.-%ige KOH (g) | 3,53 | 14,11 | 3,05 | 0,95 | 4,89 | 1,25 | 0,93 | 3,81 | 1,14 | 7,1 |
| KOH/reaktive H-Atome (mol) | 0,14 | 0,14 | 0,14 | 0,09 | 0,004 | 0,009 | 0,056 | 0,14 | 0,03 | 0,28 |
| 2. Stufe Propylenoxid/reaktive H-Atome (mol) | 22,34 | 22,35 | 22,54 | 16,51 | 16,44 | 1,18 | 3,27 | 21,63 | 3,42 | 32,65 |
| Ethylenoxid/reaktive H-Atome (mol) | - | 1 | - | - | - | - | 9,32 | 7,13 | - | 43,78 |
| OH-Zahl (mg KOH/g) | 38 | 38 | 44 | 56 | 56 | 550 | 89 | 35 | 175 | 14 |
| 3. Stufe 45 gew.-%ige KOH (g) | 13,3 | 13,3 | 13,0 | 2,67 | 13,3 | 23,7 | 6,7 | 13,3 | 16,0 | - |
| KOH/reaktive H-Atome (mol) | 0,52 | 0,13 | 0,60 | 0,25 | 0,24 | 0,17 | 0,40 | 0,50 | 0,40 | - |
| 4. Stufe Propylenoxid/reaktive H-Atome (mol) | - | - | - | 56,70 | 49,71 | 22,20 | 44,90 | 123,21 | 59,33 | - |
| Ethylenoxid/reaktive H-Atome (mol) | 633,64 | 131,93 | 742,71 | 222,57 | 220,97 | 92,36 | 137,59 | 438,38 | 339,19 | - |
| Produkt OH-Zahl (mg KOH/g) | 3,5 | 8,2 | 5,8 | 6,5 | 6,5 | 14 | 10,6 | 5,8 | 6,0 | 14 |
| Wassergehalt (%) | 0,01 | 0,01 | 0,05 | 0,03 | 0,03 | 0,04 | 0,03 | 0,01 | 0,03 | 0,03 |
| Schmelzpunkt (°C) oder Viskosität bei 25°C (mPa.sec) | 63-65 | 56-57 | 62,4 | 100 550 | 100 550 | 11 760 | 40 670 | 135 840 | 58-61 | 2200 |

*) 1 = Dodecylphenol, 2 = Trimethylolpropan, 3 = Pentaerythrit, 4 = Sorbit, 5 = Butoxyethoxyethanol

**) B7 und B10 ergeben nicht-erfindungsgemäße Produkte

Beispiele 1 bis 10

Herstellung von Polyoxyalkylenpolymeren mit weiterem hydrophobem Molekülteil H

In gemäß Abschnitt B erhaltene Polyoxyalkylenpolymere wurden nach einer der folgenden Methoden ein weiterer hydrophober Molekülteil H eingeführt.

Methode 1:

100 g Polyoxyalkylenpolymer wurden in 200 ml Toluol gelöst und azeotrop entwässert. Unter Stickstoff wurde auf 70°C abgeküht und dann 0,5 ml Bortrifluorid-diethyletherat zugefügt. Nach 15 Minuten Rühren bei 70°C wurde auf Raumtemperatur abgekühlt und ein n-Alkyloxiran oder ein Glycidylether zugegeben und 1 Stunde nachgerührt. Dann wurde mit Natriumcarbonat neutralisiert, feste Bestandteile durch Filtration abgetrennt und noch vorhandene Lösungsmittel abdestilliert.

Methode 2:

400 g getrocknetes Polyoxyalkylenpolymer (12 Stunden bei 16 mbar auf 80°C gehalten), 0,05 g Diazabicyclooctan und 500 ml trockenes Dioxan wurden zusammengegeben und 1 Stunde bei Raumtemperatur gerührt. Anschließend wurde n-Alkylmonoisocyanat zugefügt und 2 Stunden zum Sieden am Rückfluß erwärmt. Dann wurde bei 16 mbar und 130°C das Lösungsmittel abestilliert und schließlich feste Bestandteile durch Filtration abgetrennt.

Im einzelnen wurden die mit einem weiteren hydrophoben Molekülteil H versehenen Polyoxyalkylenpolymere gemäß den Beispielen 1 bis 20 hergestellt wie aus Tabelle 2 ersichtlich.

## Tabelle 2

| Beispiel Nr. | eingesetztes Polyoxyalkylen-polymer | angewendete Methode | umgesetzt mit (Gew.-% bezogen auf eingesetztes Polyoxyalkylenpolymer) | |
|---|---|---|---|---|
| 1 | B1 | 1 | 1 % | Decyloxiran |
| 2 | B1 | 2 | 1,5 % | Stearylisocyanat |
| 3 | B2 | 1 | 1,35 % | Decyloxiran |
| 4 | B3 | 1 | 1 % | Nonylphenolglycidylether |
| 5 | B3 | 2 | 1 % | Stearylisocyanat |
| 6 | B3 | 2 | 2 % | Stearylisocyanat |
| 7 | B3 | 1 | 2 % | Nonylphenolglycidylether |
| 8 | B4 | 1 | 1,38 % | Pentadecylphenylglycidylether |
| 9 | B4 | 2 | 1 % | Stearylisocyanat |
| 10 | B4 | 2 | 2 % | Stearylisocyanat |
| 11 | B4 | 1 | 4,14 % | Pentadecylphenylglycidylether |
| 12 | B5 | 2 | 0,88 % | Stearylisocyanat |
| 13 | B5 | 2 | 2,64 % | Stearylisocyanat |
| 14 | B6 | 1 | 2,37 % | Decyloxiran |
| 15 | B6 | 2 | 3,8 % | Stearylisocyanat |
| 16* | B7 | 1 | 1 % | Decyloxiran |
| 17 | B8 | 1 | 1 % | Decyloxiran |
| 18 | B8 | 2 | 1,52 % | Stearylisocyanat |
| 19 | B9 | 1 | 0,5 % | Nonylphenylglycidylether |
| 20* | B10 | 2 | 3,7 % | Stearylisocyanat |

* Beispiele 16 und 20 sind nicht-erfindungsgemäß

Beispiele 21 bis 54

In ein Gemisch aus Wasser, Alkoholen und für funktionelle Flüssigkeiten üblichen Zusatzstoffen (siehe Materialien A.) wurden verschiedene Polyoxyalkylenpolymere zugefügt. Soweit erforderlich wurde Wasser und/oder Diethylenglykol zugegeben bis eine Viskosität der Klasse ISO VG 46 (siehe DIN 51 519) vorlag. Die jeweils in Gew.-% angegebenen Gehalte an Polyoxyalkylenpolymeren beziehen sich auf die jeweilige so hergestellte fertige funktionelle Flüssigkeit.

An diesen funktionellen Flüssigkeiten wurde die Schaumneigung gemäß DIN 51 566 gemessen. Dabei wurden 200 ml der jeweiligen funktionellen Flüssigkeit in einem 1 l-Testgefäß von einem Luftstrom von 3,6 l/min durchblasen. Der Druck betrug 50 mm Wassersäule gegenüber den 200 ml Einfüllung bei einem Vordruck von 20 mm Wassersäule. Die Messung wurde entweder nach 5 Minuten oder nach erreichen eines Schaumvolumens von 800 ml beendet, je nachdem was früher der Fall war.

Weiterhin wurde an diesen funktionellen Flüssigkeiten das Luftabscheidevermögen gemäß DIN 51 381 gemessen. Die Messung wurde jeweils nach Erreichen von 99 % der Ausgangsdichte beendet. Einzelheiten sind aus Tabelle 3 ersichtlich.

**Tabelle 3**

| Beispiel Nr. | Gew.-% eingesetztes Polyoxyalkylen-polymer | eingesetztes Gemisch aus Wasser, Alkoholen und Zusatz-stoffen | Schaumneigung (Schaumvolumen in ml/nach Minuten) bei 25°C | bei 50°C | Luftabscheide-vermögen (Minuten) |
|---|---|---|---|---|---|
| 21 | 9 % B1 | A1 | 800/0,5 | 800/0,5 | 35 |
| 22 | 8,5 % aus Bsp. 1 | A1 | 800/3 | 800/0,5 | 13 |
| 23 | 4 % aus Bsp. 2 | A1 | 800/5 | 800/4 | 18 |
| 24 | 9,5 % B2 | A1 | 800/0,5 | 800/0,4 | 20 |
| 25 | 9,0 % aus Bsp. 3 | A1 | 730/5 | 800/0,5 | 19 |
| 26 | 12,5 % B3 | A1 | 800/2 | 800/1 | 35 |
| 27 | 8,5 % aus Bsp. 4 | A1 | 640/5 | 800/3 | 10 |
| 28 | 7 % aus Bsp. 5 | A1 | 270/5 | 180/5 | 20 |
| 29 | 6,5 % aus Bsp. 6 | A1 | 270/5 | 200/5 | 29 |
| 30 | 8,0 % aus Bsp. 7 | A1 | 600/5 | 800/3 | 18 |
| 31 | 10 % B4 | A1 | 800/2 | 800/1 | 80 |
| 32 | 7,5 % aus Bsp. 8 | A1 | 400/5 | 420/5 | 45 |
| 33 | 7,5 % aus Bsp. 8 und 0,5 % aus Bsp. 10 | A1 | 200/5 | 300/5 | 19 |
| 34 | 8 % aus Bsp. 9 | A1 | 280/5 | 400/5 | 18 |

## Tabelle 3 - Fortsetzung

| Beispiel Nr. | Gew.-% eingesetztes Polyoxyalkylen-polymer | eingesetztes Gemisch aus Wasser, Alkoholen und Zusatz-stoffen | Schaumneigung (Schaumvolumen in ml/nach Minuten) | | Luftabscheide-vermögen (Minuten) |
|---|---|---|---|---|---|
| | | | bei 25°C | bei 50°C | |
| 35 | 6 % aus Bsp. 10 | A1 | 350/5 | 560/5 | 18 |
| 36 | 6,5 % aus Bsp. 11 | A2 | 200/5 | 500/5 | 23 |
| 37 | 6 % aus Bsp. 11 | A1 | 450/5 | 800/0,5 | 32 |
| 38 | 6 % aus Bsp. 11 und 0,5 % aus Bsp. 10 | A1 | 150/5 | 200/5 | 26 |
| 39 | 6 % aus Bsp. 11 und 0,5 % aus Bsp. 20 | A1 | 200/5 | 700/5 | 23 |
| 40 | 15 % B5 | A1 | 300/1 | 300/0,5 | 18 |
| 41 | 15 % aus Bsp. 12 | A1 | 340/5 | 390/5 | 30 |
| 42 | 12 % aus Bsp. 13 | A1 | 180/5 | 120/5 | 27 |
| 43 | 25 % B6 | A1 | 800/2,5 | 800/1 | 12 |
| 44 | 17 % aus Bsp. 14 | A1 | 300/5 | 280/5 | 18 |
| 45 | 15 % aus Bsp. 15 | A1 | 170/5 | 380/5 | 27 |
| 46 | 18 % B7 | A1 | 800/5 | 800/3 | 25 |
| 47 | 17 % aus Bsp. 16 | A1 | 500/5 | 300/5 | 25 |

## Tabelle 3 - Fortsetzung

| Beispiel Nr. | Gew.-% eingesetztes Polyoxyalkylen- polymer | eingesetztes Gemisch aus Wasser, Alkoholen und Zusatz- stoffen | Schaumneigung (Schaumvolumen in ml/nach Minuten) bei 25°C | bei 50°C | Luftabscheide- vermögen (Minuten) |
|---|---|---|---|---|---|
| 48 | 13 % B8 | A1 | 800/0,5 | 800/0,25 | 25 |
| 49 | 11 % aus Bsp. 17 | A1 | 350/5 | 650/5 | 33 |
| 50 | 10 % aus Bsp. 18 | A1 | 50/5 | 200/5 | 22 |
| 51 | 10 % B9 | A1 | 800/2 | 800/1 | 28 |
| 52 | 5 % aus Bsp. 19 | A1 | 470/5 | 330/5 | 17 |
| 53 | 32 % B10 | A1 | 800/1,3 | 800/1,5 | 0,5 |
| 54 | 18 % aus Bsp. 20 | A1 | 360/5 | 480/5 | 0,5 |

Erläuterungen zur Tabelle 3

Die Beispiele 21, 24, 26, 31, 40, 43, 46, 47, 48, 51, 53 und 54 sind nicht erfindungsgemäß.
In Gruppen zusammengefaßt sind jeweils Beispiele, bei denen ein Polyoxyalkylenpolymer ohne Molekülteil H (1. Beispiel jeder Gruppe) und entsprechende Polyoxyalkylenpolymere mit Molekülteil H (2. und gegebenenfalls weitere Beispiele jeder Gruppe) zum Einsatz kommen.

Die Polyoxyalkylenpolymere mit Molekülteil H ergaben jeweils bessere Ergebnisse bei der Schaumneigung und/oder dem Luftabscheidevermögen als entsprechende Polyoxyalkylenpolymere ohne Molekülteil H.

**Patentansprüche**

1. Funktionelle Flüssigkeiten, die Wasser, Polyoxyalkylenpolymere, gegebenenfalls Alkohole und gegebenenfalls übliche Zusatzstoffe enthalten, dadurch gekennzeichnet, daß sie als Verdicker Polyoxyalkylen-Blockpolymere enthalten, die aus einem an einem Startermolekül (S) gebundenen hydrophoben Polyoxyalkylen-Block (P) und daran anschließend einen hydrophilen Polyoxyalkylen-Block (E) bestehen, wobei (S + P) das Umsetzungsprodukt von (S) mit 20 bis 45 Mol (je Äquivalent Aktivwasserstoff in S) Propylenoxid darstellt, und auf dieses 5 bis 30 Mol Ethylenoxid (je Alkylenoxideinheit in P) aufpolymerisiert worden sind und anschließend an den hydrophilen Polyalkylenoxid-Block (E) noch einen weiteren hydrophoben Molekülteil (H) enthalten.

2. Funktionelle Flüssigkeit nach Anspruch 1, dadurch gekennzeichnet, daß (S + P) das Umsetzungsprodukt von (S) mit 20 bis 45 Mol (je Äquivalent Aktivwasserstoff in S) eines überwiegend Propylenoxid enthaltenden Ethylenoxid/Propylenoxid-Gemisches darstellt.

3. Funktionelle Flüssigkeit nach Ansprüchen 1 und 2, dadurch gekennzeichnet, daß auf (S + P) 5 bis 30 Mol (je Alkylenoxideinheit in P) eines überwiegend Ethylenoxid enthaltenden Ethylenoxid/Propylenoxid-Gemisches aufpolymerisiert worden sind.

4. Funktionelle Flüssigkeit nach Ansprüchen 1 bis 3, dadurch gekennzeichnet, daß vor der Aufpolymerisierung des Polyoxyalkylen-Blocks (E) eine teilweise oder vollständige Aminierung der an (S + P) vorhandenen OH-Gruppen durchgeführt wird.

5. Funktionelle Flüssigkeit nach Ansprüchen 1 bis 4, dadurch gekennzeichnet, daß der Molekülteil (H) durch Umsetzung mit 4 bis 30 Mol Propylenoxid (pro Äquivalent OH-Gruppen) und in Gegenwart eines Katalysators, mit Glycidylethern mit 4 bis 30 C-Atomen, mit α-Olefinoxiden mit 4 bis 30 C-Atomen oder mit Monoisocyanaten mit 9 bis 22 C-Atomen eingeführt wurde.

6. Funktionelle Flüssigkeit nach Ansprüchen 1 bis 5, dadurch gekennzeichnet, daß sie 30 bis 85 Gew.-% Wasser und 0,5 bis 20 Gew.-% des Verdickers enthalten.

7. Funktionelle Flüssigkeit nach Ansprüchen 1 bis 6, dadurch gekenzeichnet, daß sie 0 bis 40 Gew.-% Alkohole enthält.

8. Polyoxyalkylen-Blockcopolymere, die aus einem an einem Startermolekül (S) gebundenen hydrophoben Polyoxyalkylen-Block (P) und daran anschließend einem hydrophilen Polyalkylenoxid-Block (E) bestehen, wobei (S + P) das Umsetzungsprodukt von (S) mit 20 bis 45 Mol (je Äquivalent aktiven Wasserstoffs in S) Propylenoxid oder einem übrigen Propylenoxid enthaltenden Ethylenoxid/Propylenoxid-Gemisch darstellt, und auf dieses, gegebenenfalls nach einer teilweisen oder vollständigen Aminierung der an S + P vorhandenen OH-Gruppen, 5 bis 30 Mol (je Alkylenoxid-Einheit in P) Ethylenoxid oder ein überwiegend Ethylenoxid enthaltendes Ethylenoxid/Propylenoxid-Gemisch aufpolymerisiert worden sind, dadurch gekennzeichnet, daß sie anschließend an den Polyalkylenoxid-Block E noch einen weiteren hydrophoben Molekülteil H enthalten, der durch Umsetzung mit 4 bis 30 Mol Propylenoxid (pro Äquivalent-OH-Gruppen) und in Gegenwart eines Katalysators, mit Glycidylethern mit 4 bis 30 C-Atomen, mit α-Olefinoxiden mit 4 bis 30 C-Atomen oder mit Monoisocyanaten mit 9 bis 22 C-Atomen eingeführt wurde.